# EUROPÄISCHE PATENTANMELDUNG

(11) **EP 4 212 440 A1**
(43) Veröffentlichungstag der Anmeldung: **19.07.2023**
(21) Anmeldenummer: 22212596.5
(22) Anmeldetag: 09.12.2022
(51) Int. Cl.: B65B 43/18, B65B 43/26, B25J 15/06, B66C 1/02, B65G 47/91

(54) **VORRICHTUNG UND VERFAHREN ZUM ANHEBEN VON PACKMITTEL**

(30) Priorität: 21.12.2021 DE 102021133948
(71) Anmelder: MULTIVAC Sepp Haggenmüller SE & Co. KG, 87787 Wolfertschwenden (DE)
(72) Erfinder: Häring, Rainer, 87761 Lauben (DE); Brunner, Maximilian, 87784 Westerheim (DE)
(74) Vertreter: Grünecker Patent- und Rechtsanwälte PartG mbB

(57) **Zusammenfassung**

Die Erfindung bezieht sich auf eine Vorrichtung (100) zum automatischen Anheben eines Packmittels (6), umfassend:
- ein Hebeelement (1), das zwischen einer unteren Entnahmeposition und einer oberen Übergabeposition bewegbar ist;
- eine Vakuumquelle (2), die dazu konfiguriert ist, einen Unterdruck zu erzeugen;
- ein Antriebselement (3);
- ein Saugelement (4), das wenigstens eine Öffnung (10) einer Vakuumleitung (5) aufweist und mit dem Hebeelement (1) mechanisch verbunden ist und mittels der Vakuumleitung (5) fluidtechnisch mit der Vakuumquelle (2) verbunden ist. Die Erfindung zeichnet sich dadurch aus, dass das Hebeelement (1) dazu konfiguriert ist, durch seine Gewichtskraft in der unteren Entnahmeposition das Saugelement (4) auf das oberste Packmittel (6) eines Stapels von Packmitteln (7) aufzulegen, wobei die Öffnung (10) der Vakuumleitung (5) luftdicht verschließbar ist, wobei das Hebeelement (1) dazu konfiguriert ist, sich mitsamt des angesaugten Packmittels (6) in die obere Übergabeposition zu bewegen.

## Beschreibung

Die Erfindung bezieht sich auf eine Vorrichtung gemäß dem Anspruch 1. Ferner betrifft die Erfindung ein Verfahren gemäß dem unabhängigen Anspruch 11.

### Stand der Technik

Aus der EP 1 465 809 B1 ist eine Vorrichtung zum Öffnen von Beuteln bzw. Packmitteln bekannt. Diese Vorrichtung besitzt eine Produktinformationserfassungsstation, welche die Größe eines zu verpackenden Produktes erfasst, und einen automatischen Beutelöffner, der mittels Spreizfinger in das Innere eines ungeöffneten Beutels greift und diesen anschließend vollständig öffnet.

Aus der DE 10 2017 002 052 B4 ist ein Tütenöffner bekannt, welcher über ein Gebläse verfügt, durch das eine Tüte bzw. ein Beutel aufgeblasen wird.

Die aus dem Stand der Technik bekannten Vorrichtungen besitzen in der Regel, zusätzlich zur Vereinzelung, mechanische Spreizfinger, welche in verschiedene Richtungen bewegt werden, um einen Beutel zu öffnen. Nachteilig an dieser Lösung ist, dass mehrere Antriebselemente oder komplexe Mechaniken notwendig sind, um Beutel zu öffnen. Oder aber der geschlossenen Beutel wird mit Hilfe eines Luftstroms aufgeblasen. Nachteilig an dieser Ausführung ist, dass eine sterile Innenseite des Beutels kontaminiert werden kann.

### Aufgabe

Aufgabe der Erfindung ist es, eine Vorrichtung zur Verfügung zu stellen, die unter Verwendung einfacher, technischer konstruktiver Mittel eine effektive, kostengünstige und ergonomische Bereitstellung von Packmitteln, insbesondere Beuteln, bietet. Aufgabe der Erfindung ist es auch, oder alternativ, einen, vorzugsweise teilweise, geöffneten Beutel für einen Bediener zur Verfügung zu stellen.

### Lösung

Diese Aufgabe wird gelöst durch eine Vorrichtung mit den Merkmalen des Anspruchs 1 bzw. durch ein Verfahren gemäß dem unabhängigen Anspruch 11. Vorteilhafte Weiterbildungen der Erfindung sind in den Unteransprüchen angegeben.

Die erfindungsgemäße Vorrichtung zum automatischen Anheben eines Packmittels umfasst:
- ein Hebeelement, das zwischen einer unteren Entnahmeposition und einer oberen Übergabeposition bewegbar ist;
- eine Vakuumquelle, die dazu konfiguriert ist, einen Unterdruck zu erzeugen;
- ein Antriebselement zum Antreiben des Hebeelements in die obere Übergabeposition;
- ein Saugelement, das wenigstens eine Öffnung einer Vakuumleitung aufweist und mit dem Hebeelement mechanisch verbunden ist und mittels der Vakuumleitung fluidtechnisch mit der Vakuumquelle verbunden ist. Die Erfindung ist gekennzeichnet dadurch, dass das Hebeelement dazu konfiguriert ist, durch seine Gewichtskraft in der unteren Entnahmeposition das Saugelement auf das oberste Packmittel eines Stapels von Packmitteln aufzulegen, wobei die Öffnung der Vakuumleitung luftdicht verschließbar ist, wobei das Hebeelement dazu konfiguriert ist, sich mitsamt des angesaugten Packmittels in die obere Übergabeposition zu bewegen, Angetrieben durch das Antriebselement.

Vorzugsweise ist das Antriebselement mittels Unterdruck betätigbar. Besonders bevorzugt ist das Antriebselement mit der Vakuumleitung verbunden. Dies bietet den Vorteil, dass die gesamte Vorrichtung nur ein Antriebselement und eine Vakuumquelle benötigt.

Weiterhin bevorzugt ist durch Freigeben der Öffnung der Vakuumleitung am Saugelement durch Entfernen des Packmittels das Hebeelement mittels seiner Gewichtskraft in die untere Position absenkbar. Der Beutel wird also so lange in der oberen Übergabeposition gehalten bzw. bereitgestellt, bis er aktiv von einem Bediener entnommen wird. Folglich wird rein durch das Entnehmen des Packmittels durch den Bediener automatisch der nächste Arbeitstakt gestartet. Es sind keine zusätzlichen Komponenten oder Prozessschritte notwendig, um den nächsten Arbeitstakt zu starten.

Gemäß einer bevorzugten Ausführungsform der vorliegenden Erfindung weist die Vorrichtung ein Drosselelement auf, das an der von der Vakuumquelle abgewandten und/oder zugewandten Seite des Antriebselements mit diesem fluidtechnisch verbunden ist. Dies ermöglicht es, die Geschwindigkeit, mit der sich das Hebeelement absenkt, zu beeinflussen.

Bevorratete Packmittel bzw. Beutel sind meist flach zusammengefaltet. Um einen Beutel zu öffnen, müssen zwei, eine Öffnung des Beutels bildende, Seiten gegriffen werden, um sie voneinander zu lösen. Durch elektrostatische Aufladung haften diese beiden Seiten oftmals aneinander. Daher ist es häufig nicht leicht, einen Beutel mit der Hand zu öffnen. Besonders vorteilhaft ist es daher, wenn bei der vorliegenden Erfindung mindestens zwei Saugelemente vorhanden sind, welche relativ zueinander bewegbar sind. Dadurch wird der Beutel leicht verformt, wodurch sich der Beutel etwas öffnet. Dies erleichtert dem Bediener das weitere Öffnen des Beutels erheblich. Zusätzlich oder alternativ ist es denkbar, dass alle Saugelemente an derselben Seite des Packmittels angreifen. Besonders vorteilhaft ist es zudem, wenn sich alle Saugelemente auf der nach oben gewandten Seite des Packmittels befinden. Dies vereinfacht den konstruktiven Aufbau der erfindungsgemäßen Vorrichtung stark.

Eine Ausführungsform der Erfindung sieht vor, dass die Relativbewegung der mindestens zwei Saugelemente mit einer Bewegung, insbesondere Anheben, des Hebeelements gekoppelt ist. Denkbar ist es ferner, dass die Bewegungskoppelung mittels eines Koppelgetriebes ausgeführt ist. Somit kann auf ein zusätzliches Antriebselement verzichtet werden, was den konstruktiven Aufbau der Vorrichtung vereinfacht.

Die Erfindung betrifft des Weiteren ein Verfahren zum automatischen Anheben eines Packmittels.

Das erfindungsgemäße Verfahren zum Betrieb einer Vorrichtung zum automatischen Anheben eines Packmittels umfasst folgende Schritte:
- Auflegen eines an einem Hebeelement angeordneten Saugelements auf das Packmittel mittels wenigstens der Gewichtskraft des Hebeelements in einer unteren Entnahmeposition;
- Ansaugen des Packmittels mittels des Saugelements, das die Öffnung einer Vakuumleitung bildet, mittels Unterdruck einer mit der Vakuumleitung verbundenen Vakuumquelle;
- Bewegen des Hebeelements mittels eines Antriebelements in eine obere Übergabeposition, um das Packmittel von einem Stapel von Packmittel anzuheben;
- Entfernen, vorzugsweise manuell, des Packmittels vom Saugelement.

In einer denkbaren Ausführung wirkt durch Abdichten der Vakuumleitung durch das Packmittel die Vakuumquelle auf das Antriebselement. Dies ermöglicht, die Vorrichtung lediglich mittels einer einzigen Vakuumquelle und eines einzigen Antriebselementes zu betreiben, welches eine einfache und zuverlässige konstruktive Ausführung erlaubt.

Vorzugsweise wird durch Entfernen des Packmittels vom Saugelement die Vakuumleitung zur Umgebung hin geöffnet, und somit übersteigt die auf das Hebeelement wirkende Gewichtskraft die vom Antriebselement wirkende Kraft auf das Hebeelement. Folglich wird rein durch das Entnehmen des Packmittels durch den Bediener automatisch der nächste Arbeitstakt gestartet. Es sind keine zusätzlichen Komponenten oder Prozessschritte notwendig, um den nächsten Arbeitstakt zu starten.

In einer Weiterbildung der Erfindung sind mindestens zwei Saugelement vorhanden, welche eine Relativbewegung zueinander ausführen, wobei diese Relativbewegung zeitgleich mit der Bewegung des Hebeelements ausgeführt wird. Dadurch wird der Beutel leicht verformt, wodurch sich der Beutel etwas öffnet. Dies erleichtert dem Bediener das weitere Öffnen des Beutels erheblich.

Besonders bevorzugt wird die Relativbewegung mittels eines Koppelgetriebes zwischen den Saugelementen und dem Hebeelement ausgeführt. Somit kann auf ein zusätzliches Antriebselement verzichtet werden, was den konstruktiven Aufbau der Vorrichtung vereinfacht.

### Kurze Beschreibung der Figuren

Im Folgenden wird ein vorteilhaftes Ausführungsbeispiel der Erfindung anhand einer Zeichnung näher dargestellt. Im Einzelnen zeigen:
Fig. 1 eine Seitenansicht einer erfindungsgemäßen Vorrichtung in der unteren Entnahmeposition
Fig. 2 eine Seitenansicht der erfindungsgemäß Vorrichtung in der oberen Übergabeposition
Fig. 3 eine perspektivische Ansicht der erfindungsgemäßen Vorrichtung
Fig.4a eine Draufsicht der erfindungsgemäßen Vorrichtung in der unteren Entnahmeposition
Fig. 4b eine Vorderansicht auf die Öffnung eines Packmittels in der unteren Entnahmeposition
Fig.5a eine Draufsicht einer Vorrichtung in der oberen Übergabeposition
Fig. 5b eine Vorderansicht auf die Öffnung des Packmittels in der oberen Übergabeposition

### Ausführliche Beschreibung

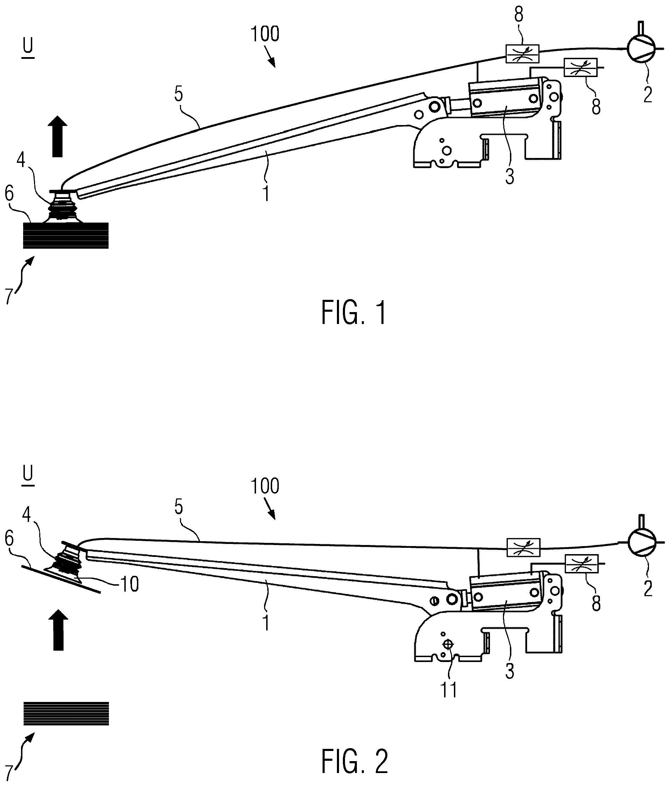

Figur 1 zeigt eine Seitenansicht einer erfindungsgemäßen Vorrichtung 100 in der unteren Entnahmeposition. Ein Hebeelement 1 mit einem daran befestigten Saugelement 4 liegt auf einem obersten Packmittel 6 eines Stapels von Packmitteln 7 auf. Das Hebeelement 1 ist mit einem Antriebselement 3 mechanisch verbunden. Eine Vakuumleitung 5 verbindet das Antriebselement 3 mit dem Saugelement 4. Zusätzlich ist die Vakuumleitung 5 mit einer Vakuumquelle 2 verbunden. Des Weiteren ist das Antriebselement 3 mit einem Drosselelement 8 verbunden bzw. ist ein Drosselelement 8 in der Vakuumleitung 5 vorhanden.

An der Vakuumquelle 2 liegt ständig ein Unterdruck an. Solange kein Packmittel 6 an dem Saugelement 4 anliegt, ist die Vakuumleitung 5 zur Umgebung U offen. Die durch das Antriebselement 3 auf das Hebeelement 1 erzeugte Kraft ist deutlich kleiner als die auf das Hebeelement 1 wirkende Gewichtskraft. Wird nun die Öffnung 10 der Vakuumleitung 5 durch das Packmittel 6 verschlossen, ist die Vakuumleitung 5 und auch das Antriebselement 3 nicht mehr belüftet. Nun wirkt die Vakuumquelle 2 auf das Antriebselement 3. Die am Antriebselement 3 wirkende Kraft auf das Hebeelement 1 ist nun größer als die auf das Hebeelement 1 wirkende Gewichtskraft. Das Hebeelement 1 beweget sich nach oben, hier mittels einer Schwenkbewegung um eine Schwenkachse 11.

Figur 2 zeigt eine Seitenansicht der erfindungsgemäßen Vorrichtung 100 in der oberen Übergabeposition. Solange das Packmittel 6 an dem Saugelement 4 anliegt, verweilt das Hebeelement 1 in der oberen Übergabeposition.

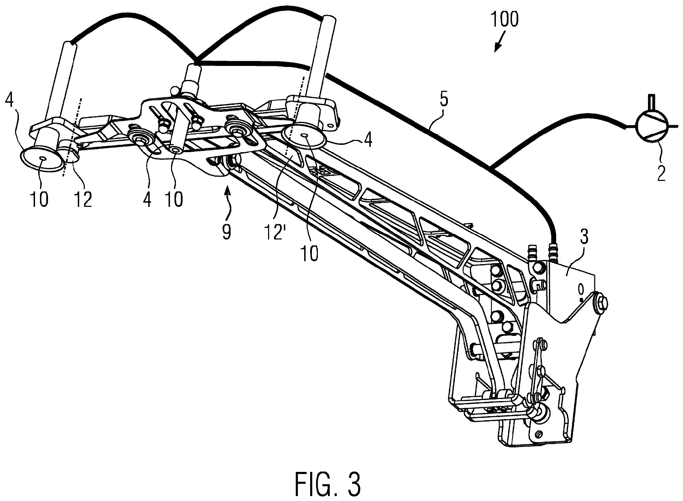

Figur 3 zeigt eine bevorzugte Ausführungsform der erfindungsgemäßen Vorrichtung 100 in einer perspektivischen Ansicht. Die Vakuumleitung 2 verfügt hier über drei Öffnungen 10 an drei Saugelementen 4. Zudem sind die äußeren zwei Saugelemente 4 beweglich jeweils um eine Drehachse 12, 12' gelagert. Mittels eines Koppelgetriebes 9 sind die Saugelemente 4 mit dem Hebeelement 1 gekoppelt. Eine Bewegung des Hebeelements 1 führt durch das Koppelgetriebe 9 zu einer Bewegung der Saugelemente 4. Dabei bewegen sich die Saugelemente 4 um ihre jeweilige Drehachse 12, 12'. Dabei findet eine Relativbewegung der beiden Saugelemente 4 zueinander statt.

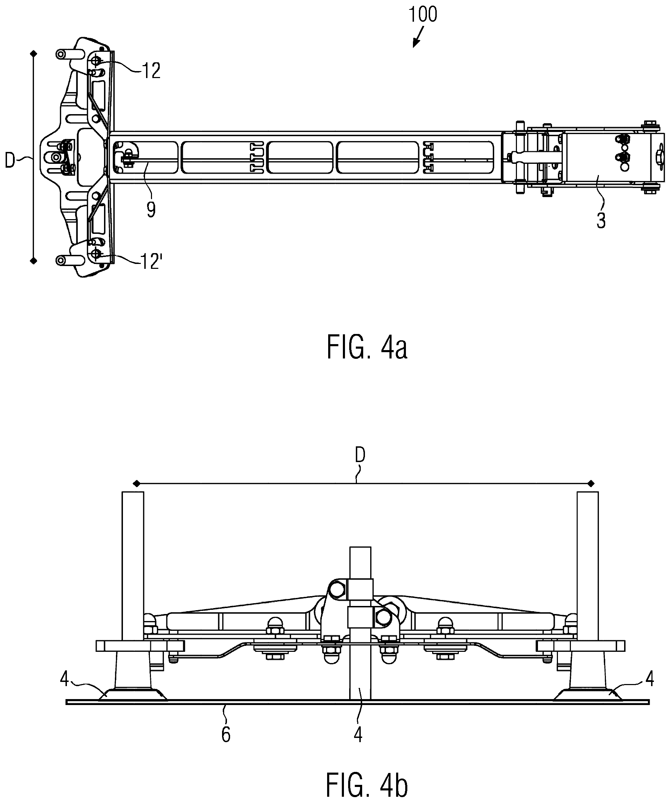

Figur 4a zeigt eine Draufsicht auf eine bevorzugte Ausführungsform der erfindungsgemäßen Vorrichtung 100 in der unteren Entnahmeposition. Die äußeren zwei Saugelemente 4 weisen einen Abstand D zueinander auf.

Figur 4b zeigt eine Vorderansicht auf das Packmittel 6, insbesondere die Öffnung eines Beutels. Die obere Seite des Beutels ist durch alle drei Saugelement 4 angesaugt.

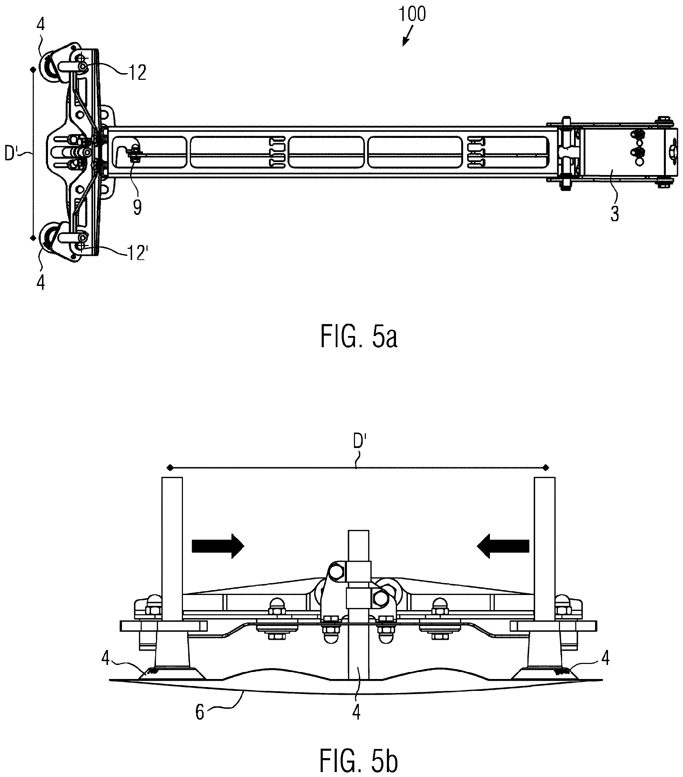

Figur 5a zeigt eine Draufsicht auf eine bevorzugte Ausführungsform der erfindungsgemäßen Vorrichtung 100 in der oberen Übergabeposition. Die äußeren zwei Saugelemente (4) wurden - durch das Koppelgetriebe 9 - relativ zueinander auf den Abstand D' bewegt, der kleiner ist als der Abstand D.

Figur 5b zeigt eine Vorderansicht auf das Packmittel 6, insbesondere die Öffnung eines - nun geöffneten - Beutels. Durch die Relativbewegung der zwei äußeren Saugelemente 4 auf den Abstand D' wird die Oberseite des Packmittels 6 gestaucht. Die Unterseite des Packmittels 6 wird durch die Bewegung der Saugelemente 4 ebenfalls verformt. Dadurch wird das Packmittel 6 leicht geöffnet. Somit kann das Packmittel 6 von einem Bediener leicht und in geöffnetem Zustand abgenommen werden.

### Bezugszeichenliste

- 1: Hebeelement
- 2: Vakuumquelle
- 3: Antriebselement
- 4: Saugelement
- 5: Vakuumleitung
- 6: Packmittel
- 7: Stapel von Packmittel
- 8: Drosselelement
- 9: Koppelelement
- 10: Öffnung Vakuumleitung
- 11: Schwenkachse
- 12, 12': Drehachsen
- U: Umgebung
- D: erster Abstand der Saugelemente
- D': zweiter Abstand der Saugelemente
- 100: Vorrichtung

## Patentansprüche

1. Vorrichtung (100) zum automatischen Anheben eines Packmittels (6), umfassend:
- ein Hebeelement (1), das zwischen einer unteren Entnahmeposition und einer oberen Übergabeposition bewegbar ist;
- eine Vakuumquelle (2), die dazu konfiguriert ist, einen Unterdruck zu erzeugen;
- ein Antriebselement (3) zum Antreiben des Hebeelements (1) in die obere Übergabeposition;
- ein Saugelement (4), das wenigstens eine Öffnung (10) einer Vakuumleitung (5) aufweist und mit dem Hebeelement (1) mechanisch verbunden ist und mittels der Vakuumleitung (5) fluidtechnisch mit der Vakuumquelle (2) verbunden ist, **dadurch gekennzeichnet, dass** das Hebeelement (1) dazu konfiguriert ist, durch seine Gewichtskraft in der unteren Entnahmeposition das Saugelement (4) auf das oberste Packmittel (6) eines Stapels von Packmitteln (7) aufzulegen, wobei die Öffnung (10) der Vakuumleitung (5) luftdicht verschließbar ist, wobei das Hebeelement (1) dazu konfiguriert ist, sich angetrieben durch das Antriebselement (3) mitsamt des angesaugten Packmittels (6) in die obere Übergabeposition zu bewegen.

2. Vorrichtung nach Anspruch 1, **dadurch gekennzeichnet, dass** das Antriebselement (3) mittels Unterdruck betätigbar ist.

3. Vorrichtung nach Anspruch 1 oder 2, **dadurch gekennzeichnet, dass** das Antriebselement (3) mit der Vakuumleitung (5) verbunden ist.

4. Vorrichtung nach Anspruch 3, **dadurch gekennzeichnet, dass** durch Freigeben der Öffnung (10) der Vakuumleitung (5) am Saugelement (4) durch Entfernen des Packmittels (6) das Hebeelement (1) mittels seiner Gewichtskraft in die untere Position absenkbar ist.

5. Vorrichtung nach Anspruch 4, **dadurch gekennzeichnet, dass** ein Drosselelement (8) an der von der Vakuumquelle (2) abgewandten und/oder zugewandten Seite des Antriebselements (3) mit diesem fluidtechnisch verbunden ist.

6. Vorrichtung nach einem der vorangehenden Ansprüche, **dadurch gekennzeichnet, dass** mindestens zwei Saugelemente (4) vorhanden sind und diese relativ zueinander bewegbar sind.

7. Vorrichtung nach Anspruch 6, **dadurch gekennzeichnet, dass** die Saugelemente (4) derart konfiguriert und angeordnet sind, dass alle Saugelemente (4) an derselben Seite des Packmittels (6) angreifen.

8. Vorrichtung nach Anspruch 7, **dadurch gekennzeichnet, dass** in der unteren Entnahmeposition die Öffnungen (10) aller Saugelemente (4) nach unten weisen.

9. Vorrichtung nach Anspruch 8, **dadurch gekennzeichnet, dass** die Relativbewegung der mindestens zwei Saugelemente (4) mit einer Bewegung, insbesondere Anheben, des Hebeelements (1) gekoppelt ist.

10. Vorrichtung nach Anspruch 9, **dadurch gekennzeichnet, dass** die Bewegungskoppelung mittels einer Koppelgetriebe (9) ausgeführt ist.

11. Verfahren zum Betrieb einer Vorrichtung (100) zum automatischen Anheben eines Packmittels (6), umfassend folgende Schritte:
- Auflegen eines an einem Hebeelement (1) angeordneten Saugelements (4) auf das Packmittel (6) mittels wenigstens der Gewichtskraft des Hebeelements (1) in einer unteren Entnahmeposition;
- Ansaugen des Packmittels (6) mittels des Saugelements (4), das wenigstens eine Öffnung (10) einer Vakuumleitung (5) aufweist, mittels Unterdruck einer an der Vakuumleitung (5) verbundenen Vakuumquelle (2);
- Bewegen des Hebeelements (6) mittels eines Antriebelements (3) in eine obere Übergabeposition, um das Packmittel (6) von einem Stapel von Packmittel (7) anzuheben;
- Entfernen, vorzugsweise manuell, des Packmittels (6) vom Saugelement (4).

12. Verfahren nach Anspruch 11, wobei durch Abdichten der Vakuumleitung (5) durch das Packmittel (6) die Vakuumquelle (2) auf das Antriebselement (3) wirkt.

13. Verfahren nach Anspruch 12, wobei durch Entfernen des Packmittels (6) vom Saugelement (4) die Vakuumleitung (5) zur Umgebung (U) hin geöffnet wird und somit die auf das Hebeelement (1) wirkende Gewichtskraft die vom Antriebselement (3) wirkende Kraft auf das Hebeelement (1) übersteigt.

14. Verfahren nach Anspruch 13, wobei mindestens zwei Saugelement (4) vorhanden sind, welche eine Relativbewegung zueinander ausführen und diese Relativbewegung zeitgleich mit der Bewegung des Hebeelements (1) ausgeführt wird.

15. Verfahren nach Anspruch 14, wobei die Relativbewegung mittels eines Koppelgetriebes (9) zwischen den Saugelementen (4) und dem Hebeelement (1) ausgeführt wird.
